# EUROPÄISCHE PATENTSCHRIFT

(11) **EP 1 044 808 B1**
(45) Veröffentlichungstag und Bekanntmachung des Hinweises auf die Patenterteilung: **28.11.2007**
(21) Anmeldenummer: 99810311.3
(22) Anmeldetag: 14.04.1999
(51) Int. Cl.: B41B 19/00, H04N 1/04

(54) **Verfahren zur Erzeugung von Gravurdaten**
Method for the generation of engraving data
Méthode de production de données de gravure

(43) Veröffentlichungstag der Anmeldung: 18.10.2000
(73) Patentinhaber: MDC Max Dätwyler Bleienbach AG, CH-3368 Bleienbach (CH)
(72) Erfinder: Schultze, Stefan, 4900 Langenthal (CH); Denzler, Urs, 4900 Langenthal (CH); Funk, Peter, 27777 Ganderkesee (DE)
(74) Vertreter: Roshardt, Werner Alfred

(56) Entgegenhaltungen:
- EP-A- 0 488 974
- EP-A- 0 632 396
- WO-A-83/01696
- US-A- 4 075 663
- US-A- 5 778 091

## Beschreibung

### Technisches Gebiet

Die Erfindung betrifft ein Verfahren zur Erzeugung von Gravurdaten, insbesondere für einen Tiefdruckzylinder, auf der Basis einer vektorisierten Druckvorlage und einer Rastervorgabe, wobei für die Gravurdaten mindestens ein Arbeitsraster gewählt wird, das von der Rastervorgabe hinsichtlich einer Druckdichte und/oder Winkelung abweicht. Ferner bezieht sich die Erfindung auf eine Vorrichtung zum Gravieren eines Tiefdruckzylinders entsprechend den nach dem Verfahren erzeugten Gravurdaten sowie auf ein Software-Produkt zur Erzeugung von Gravurdaten.

### Stand der Technik

Das elektronisch-mechanische Gravieren von Druckformen ist spätestens seit den siebziger Jahren mit hoher Präzision und Zuverlässigkeit möglich. Dabei ist bekannt (vgl. z.B. EP 0 056 829 B1), daß beim Vierfarben-Druck die Raster der verschiedenen Farben so aufeinander abgestimmt werden müssen, daß keine sichtbaren Farbverschiebungen entstehen (Farbdrift).

Bei der Herstellung der Gravurdaten (d. h. der Daten, mit welchen die Gravurmaschine zur Bearbeitung des Tiefdruckzylinders angesteuert werden) aus einer digital abgespeicherten Druckvorlage wird herkömmlicherweise zuerst eine hochauslösende Bitmap erstellt, um dann eine Reduktion auf die vom Auftraggeber vorgegebene Rasterdichte vorzunehmen.

Es ist offensichtlich, daß beim Übergang von der hochauflösenden Bitmap auf die vorgegebene Rasterdichte ein Verlust an Wiedergabegenauigkeit in Kauf genommen werden muß. In der Praxis führt das häufig dazu, daß feine Linien-Muster und Schriften unscharf bzw. unregelmäßig im Sinne eines Moiré-Effektes werden. Bei mehrfarbigen Druckerzeugnissen können zudem an den Liniengrenzen unerwünschte Farbeffekte entstehen, weil aufgrund der unterschiedlichen Farbraster jeweils unterschiedliche Liniengrenzen nicht vermeidbar sind.

### Darstellung der Erfindung

Aufgabe der Erfindung ist es, ein Verfahren der eingangs genannten Art anzugeben, das auch bei fein strukturierten Druckvorlagen höchstmögliche Bildqualität ("Schärfe", "Farbpräzision") sicherstellt.

Die Lösung der Aufgabe ist durch die Merkmale des Anspruchs 1 definiert. Gemäss der Erfindung wird nicht einfach die vorgegebene Druckdichte (Rasterfeinheit) angewendet (wie es eigentlich vom Auftraggeber erwartet bzw. verlangt wird). Vielmehr wird um die vorgegebene Druckdichte herum ein Variationsbereich definiert und dann innerhalb dieses Bereiches in Abhängigkeit von einer Breite, einem Abstand und/oder einer Priodizität von in der konkret vorliegenden Druckvorlage enthaltenen Linienelementen und/oder in Abhängigkeit von Font-Hinting-Daten von in der konkret vorliegenden Druckvorlage vorhandenen Schriftelementen ein bestmöglich angepasstes Raster ermittelt.

Bei der Erfindung geht es nicht darum, dass innerhalb des (vor-)definierten Variationsbereiches einfach das feinstmögliche Raster gewählt wird. Je nach Art der Geometrie (z. B. Periodizität eines Linien-Musters) kann es durchaus sein, dass ein leicht gröberes Raster mit der Geometrie (z.B. Periodizität) zusammenfällt und so ein Bild maximaler Schärfe zulässt. Wichtig ist dabei, dass die Gravurmaschine im Prinzip beliebige Raster erzeugen kann (z. B. 70.65 oder 63.88) und nicht nur diskrete Tabellenwerte akzeptiert (z.B. 65, 70, 90). Zu beachten ist ferner, dass mit dem erfindungsgemässen Verfahren der bestmögliche Gebrauch der nicht auflösungsbegrenzten Ausgangsdaten gemacht wird und dabei auf eine hochauflösende Bitmap insgesamt verzichtet wird.

Der Variationsbereich ist ein geeignet gewählter Parameter des erfindungsgemässen Verfahrens. Er ist typischerweise maximal 1/3 der vorgegebenen Rasterauflösung und kann beispielsweise bei 20% oder weniger liegen. Er braucht nicht symmetrisch (z.B. +/-10%) bezüglich des vorgegebenen Rasterwertes angeordnet zu sein, sondern kann auch gegen feine Werte verschoben sein (z.B. +12%/ -8% der Rastervorgabe).

In einem ersten Schritt werden in der Druckvorlage Linienelemente ermittelt (was aufgrund der vektorisierten Daten mit relativ einfachen Suchbefehlen geschehen kann). Für diese wird dann innerhalb des Variationsbereiches ein an die Geometrie (z.B. Breite, Abstand und/oder Periodizität) der Linien angepasstes so genanntes Arbeitsraster bestimmt. Je nach Ergebnis kann das Arbeitsraster direkt als Gravurraster übernommen oder noch weiter variiert bzw. modifiziert werden. Ziel der Anpassung ist es, Rasterpunkte (Rasterzellen) und Linien(element)grenzen zur Deckung zu bringen.

In einem nachfolgenden Schritt werden die Schriftelemente der Druckvorlage identifiziert und auf der Basis der vorhandenen Font-Hinting-Daten an das Arbeitsraster angepasst. D.h., die Schriftelemente (Buchstaben mit vorgegebenem Schrifttyp) werden innerhalb der durch die Font-Hinting-Daten definierten Grenzen verschoben, gedehnt oder gestaucht, um die horizontalen und vertikalen Abschnitte in Deckung mit dem Arbeitsraster zu bringen.

Bei einem Mehrfarbendruck wird bekanntlich mit vorgegebenen Rastersätzen gearbeitet. Ist also das Raster für eine der Farben gemäss den beschriebenen Verfahrensschritten an die Elemente der Druckvorlage angepaßt, ergeben sich daraus an sich auch die Arbeitsraster der anderen Farben (vgl. z.B. EP 0 056 829). Entsprechend dem Grundgedanken der Erfindung sollten aber auch diese in Übereinstimmung mit den Linien- und Schriftelementen sein. Im allgemeinen wird dies aber nicht der Fall sein. Aus diesem Grund werden auch die Raster der anderen Farben in der beschriebenen Weise an die Elemente der Druckvorlage angepaßt. Es ist nicht ausgeschlossen, daß bei einer Farbe zwar ein optimal angepaßtes Raster gefunden werden kann, daß aber die zugehörigen anderen Farbraster nicht ausreichend (d. h. innerhalb der zulässigen Grenzen) gedehnt, gestaucht, vergrößert bzw. verkleinert werden können, um ein insgesamt akzeptables Ergebnis zu erhalten. Dann ist es erforderlich, daß zur Verbesserung des Gesamtergebnisses entweder das erwähnte "optimal angepaßte" Farbraster nur "suboptimal angepaßt" gewählt wird, so dass bei den anderen Farbrastern die gewünschte Abstimmungsgenauigkeit möglich ist, oder die Druckvorlage (zwecks Überarbeitung durch den Grafiker) zurückgewiesen wird.

Zur weiteren Verbesserung der Druckergebnisse können die Arbeitsraster an die Abmessungen der Nutzen (z.B. der einzelnen Etikette) angepaßt werden. Auch hier wird mit Dehnen bzw. Stauchen der Rastergeometrie gearbeitet.

Schließlich kann auch vorgesehen sein, zwischen den einzelnen Nutzen in Achsrichtung des Tiefdruckzylinders (= Vorschubrichtung des Gravierkopfs) kleine Abstände einzuschieben. Unter "klein" werden hier Abstände verstanden, die kleiner sind als ein Abstand zwischen den Rasterpunkten. Sie sollen auch innerhalb des weiter oben genannten Variationsbereiches der Raster liegen. Auf diese Weise wird sichergestellt, daß die Nutzen nicht nur im wesentlichen dieselbe Qualität haben, sondern vollständig identisch sind. D.h. in jedem Nutzen sind allfällige Restfehler am genau gleichen Ort und in gleicher Weise unscheinbar.

Im Rahmen der Erfindung ist es auch möglich, in Vorschubrichtung zwischen verschiedenen Rastern zu variieren. Der Sinn dieser Maßnahme kann z.B. darin liegen, auch dann eine optimale, auf jeden einzelnen Nutzen angepaßte Druckqualität zu erreichen, wenn auf einen Zylinder ganz unterschiedliche Nutzen (z.B. die auf einer Flasche angebrachten unterschiedlichen Etiketten) graviert werden.

Die Eingabedaten können in einem einzigen Datenblock (File) oder auch in mehreren getrennt untergebracht werden. Im erstgenannten Fall erfolgt das Gravieren in einem Durchgang ohne Unterbruch. Im zweitgenannten Fall kann (bzw. muß) der Gravierkopf zwischen den einzelnen Datenblöcken kurz angehalten werden, um die Steuerparameter für die geänderten Raster einzustellen.

An sich ist das erfindungsgemässe Verfahren unabhängig davon, welche Gravur-Technik verwendet wird. Es wird jedoch hauptsächlich für lasertechnisch und elektromechanisch arbeitende Maschinen eingesetzt (letztere besitzen einen schwingenden Stichel zum Gravieren). Eine solche ist so ausgebildet und derart ansteuerbar, daß die Zeilenabstände in Vorschubrichtung und die Punktabstände (d. h. Abstände der Rasterzellen) innerhalb der Zeilen im wesentlichen frei einstellbar sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b: eine schematische Darstellung zur Erläuterung des Problems der Rasterung von PostScript-Daten;
- Fig. 2: eine schematische Darstellung des Prinzips der Erfindung;
- Fig. 3: eine schematische Darstellung einer Anordnung von Rasterzellen in der Draufsicht;
- Fig. 4: Beispiel einer Aufteilung der Oberfläche eines Zylinders in verschiedene Nutzen und Abschnitte;
- Fig. 5: Beispiel eines zu verarbeitenden Gittermusters.

### Wege zur Ausführung der Erfindung

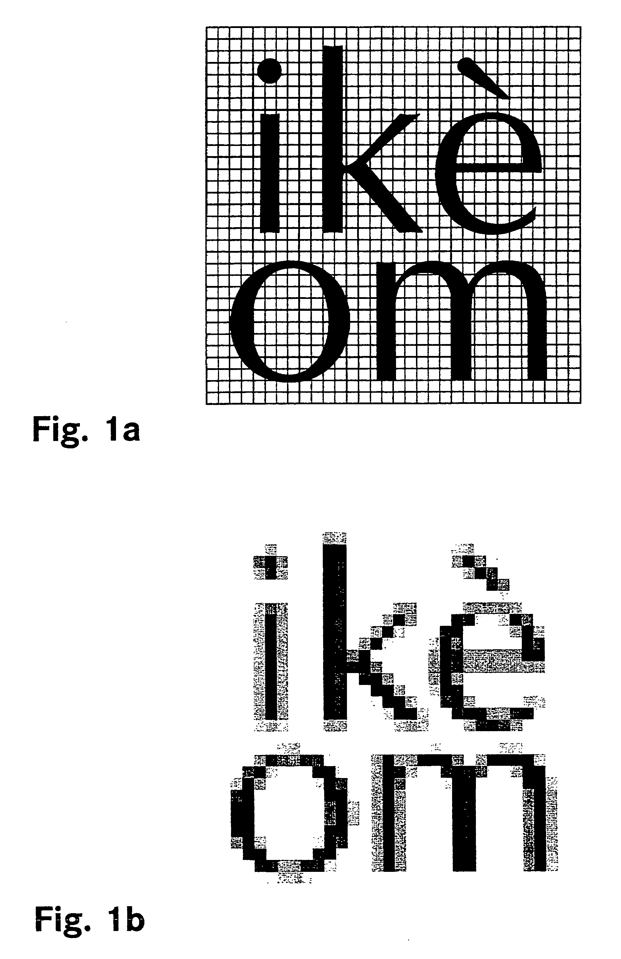

Anhand der Figuren 1a, 1b soll kurz die Problematik der Rasterung erläutert werden. Ausgangspunkt (vgl. Fig. 1a) ist im vorliegenden Beispiel eine Schrift im PostScript-Format. (Im folgenden wird der Begriff "PostScript" synonym für irgendeine vektorisierte bzw. nicht auflösungsbegrenzte Darstellung von Schrift-, Linien- oder sonstiger Bildinformation verstanden.) Wenn eine solche Schrift in einem gewünschten Raster (wie er durch das in Fig. 1a hinterlegte Gittermuster veranschaulicht ist) gedruckt werden soll, ergeben sich fast zwangsläufig Unschärfen, weil das Raster nicht an die Schriftelemente angepaßt ist bzw. angepaßt sein kann. Bei einem halbtonfähigen Druckverfahren (wie z.B. dem Tiefdruckverfahren) wird sich dann zum Beispiel ein Druckbild wie in Fig. 1b dargestellt ergeben. Zu beachten ist, daß beispielsweise bei einem Vierfarbendruck dieses Problem für jede der vier Farben besteht und zwar in je unterschiedlicher Weise. Bei sich regelmäßig wiederholenden Linienelementen kann das Problem besonders störend zum Ausdruck kommen.

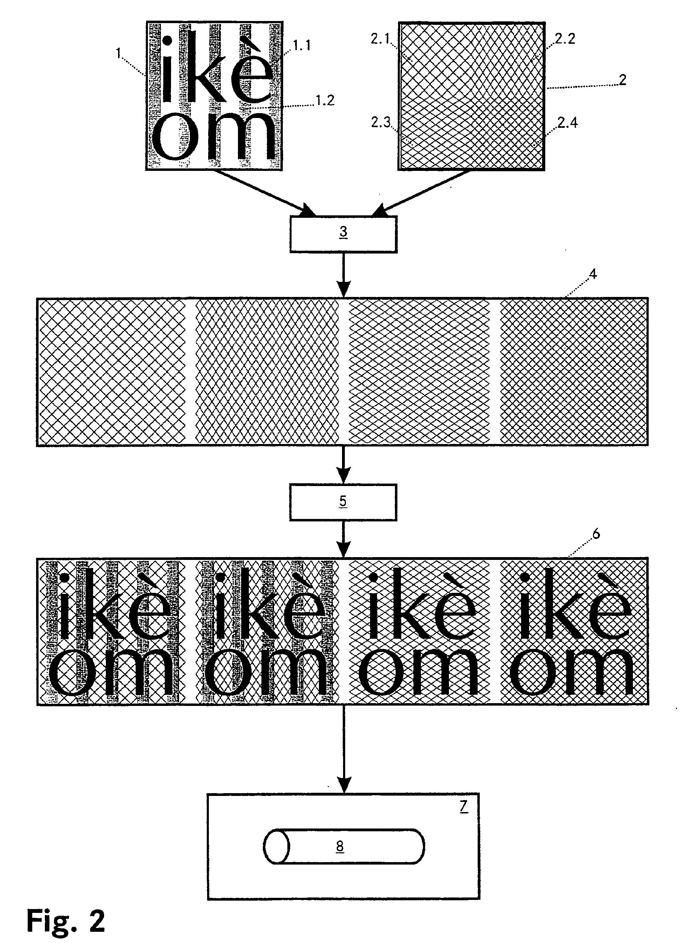

Zur Erläuterung des erfindungsgemässen Prinzips wird auf Fig. 2 Bezug genommen. Es wird ausgegangen von einer Druckvorlage 1 im PostScript-Format. (Diese wird z.B. auf einem Computer mit einem geeigneten Programm erstellt und steht als Datei zur Verfügung.) Die Druckvorlage 1 enthält diverse Schriftelemente 1.1 (hier im Vordergrund) und Linienelemente 1.2 (hier im Hintergrund). Weiter wird - vom Auftraggeber, beispielsweise vom Grafiker - ein Rastersatz 2 (im vorliegenden Beispiel mit vier verschiedenen Farbrastern 2.1 ,..., 2.4 für vier Prozeßfarben) vorgegeben.

Gemäss der Erfindung ermittelt nun ein Raster-Rechner 3 einen an die Druckvorlage 1 optimal angepaßten Arbeitsrastersatz 4. (In der Praxis ist der Raster-Rechner 3 eine Software bzw. ein Software-Modul.) Der genannte Arbeitsrastersatz 4 weicht hinsichtlich der Druckdichte und/oder Winkelung vom Rastersatz 2 ab. Die Abweichungen liegen jedoch innerhalb eines vordefinierten Variationsbereiches von z.B. +/- 10 %. (Die Größe des Variationsbereiches ist im Einzelfall derart, daß einerseits keine Verschlechterung gegenüber einem mit dem vorgegebenen Rastersatz 2 erzeugten Druckbild und andererseits keine unnötig große Feinheit entsteht. Sie kann ferner von Eigenschaften der verwendeten Druckfarbe, vom Trägermaterial, von der Feinheit des Rasters etc. abhängen.) Die Arbeitsraster entsprechen im Normalfall nicht einem konventionellen Raster (z.B. 70 Linien pro Zentimeter/40°Winkelung). Vielmehr können sie beliebige Werte annehmen (z.B. 73.453 Linien pro Zentimeter/38.120° Winkelung). Die Arbeitsraster werden im wesentlichen durch automatische Analyse der relevanten Linienelemente der Druckvorlage 1 bestimmt. Ist beispielsweise ein Streifenmuster vorhanden, werden die Frequenzen des Arbeitsrastersatzes 4 derart an die Frequenzen des Streifenmusters angepaßt, daß die Abstände und Breiten der Linien ohne lokale "Schwankungen" (Schwebung) wiedergegeben werden können. Es können dabei sogenannte Stroke-Hinting-Informationen herangezogen werden. Aus diesen ergibt sich, innerhalb welcher Grenzen und nach welchen Regeln eine Änderung der Abstände und Breiten zulässig ist.

Als nächstes werden mit einem Gravurdaten-Rechner 5 die Gravurdaten 6 berechnet. (Auch hier sei der Klarheit halber erwähnt, daß der Gravurdaten-Rechner 5 - zusammen mit dem erwähnten Raster-Rechner 3 - ein integraler Bestandteil eines Software-Paketes sein kann.) Im Rahmen dieser Verarbeitung werden die Schriftelemente soweit nötig unter Anwendung allfälliger Font-Hinting Informationen (welche dem Schrifttyp zugeordnet sind) auf den Arbeitsrastersatz 4 ausgerichtet.

Die Gravurdaten 6 werden schließlich einer mechanischen Gravurmaschine 7 zur Herstellung der Tiefdruckzylinder 8 übergeben. Es versteht sich, daß die Gravurmaschine 7 so ausgeführt sein muß, daß sie im Prinzip beliebige Raster gravieren kann. Mit anderen Worten: Winkelgeschwindigkeit des Tiefdruckzylinders 8 (bzw. Arbeitsfrequenz des Gravierstichels) und Schrittweite des Vorschubs des Gravierkopfes müssen mit hoher Genauigkeit auf beliebige Werte eingestellt werden können.

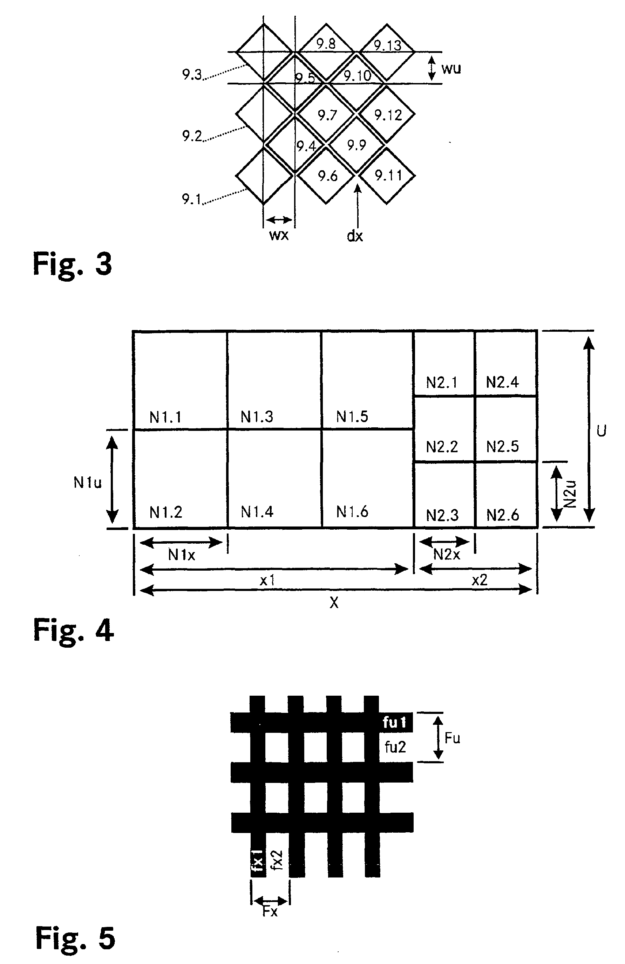

Fig. 3 zeigt beispielhaft eine typische Anordnung von Rasterzellen 9.1 bis 9.13, wie sie beispielsweise mit einer mechanischen Gravurmaschine in die Oberfläche eines Tiefdruckzylinders eingraviert werden. Für das nachfolgende Beispiel sind folgende Parameter von Interesse (x = Achsrichtung, u = Umfangsrichtung):
wx = Abstand der Zentren der Rasterzellen zweier Gravurspalten
wu = Abstand der Zentren der Rasterzellen zweier Gravurzeilen
dx = Distanz zwischen zwei in einer Gravurzeile nebeneinander liegenden Rasterzellen

Fig. 4 veranschaulicht beispielhaft eine mögliche Aufteilung der Oberfläche eines Tiefdruckzylinders in verschiedene Abbildungen, auch Nutzen genannt (z.B. in Etiketten unterschiedlicher Größe):
N1 = zu gravierende Abbildung (Nutzen) in Abbildungsgrösse 1
N2 = zu gravierende Abbildung (Nutzen) in Abbildungsgrösse 2

Es wird angenommen, daß die einzelnen Nutzen N1.i und N2.i (i = 1 bis 6) identisch sind:
N1.1 = N1.2 = N1.3 = N1.4 = N1.5 = N1.6
N2.1 = N2.2 = N2.3 = N2.4 = N2.5 = N2.6

Ferner wird folgende Nomenklatur verwendet:
N1x, N2x = Breite der Nutzen:
   N1x_mm, N2x_mm = Breite der Nutzen in mm;
   N1x_cell, N2x_cell = Breite der Nutzen in Anzahl Abständen wx;
N1u, N2u = Höhe der Nutzen:
   N1u_mm, N2u_mm = Höhe der Nutzen in mm;
   N1u_cell, N2u_cell = Höhe der Nutzen in Anzahl Abständen wu;
X = Breite des Zylinders:
   X_mm = Breite des Zylinders in mm;
   X_cell = Breite des Zylinders in Anzahl Abständen wx;
U = Umfang des Zylinders:
   U_mm = Umfang in mm;
   U_cell = Umfang in Anzahl Abständen wu;
x1 = Zylinderabschnitt 1
x2 = Zylinderabschnitt 2
Fx(Ni) = Rasterperiode im Nutzen Ni in Achsrichtung in mm
Fu(Ni) = Rasterperiode im Nutzen Ni in Umfangsrichtung in mm
fx1, fu1 = farbiger Anteil des Bildrasters
fx2, fu2 = weisser Anteil des Bildrasters

Dem nachfolgenden Erläuterungsbeispiel soll folgende Aufgabenstellung zugrunde liegen: Die Nutzen N1 und N2 sollen jeweils sechs Mal mit maximaler Abbildungsqualität graviert werden. Dabei soll der Nutzen N2 eine im Verhältnis 2/3 kleinere Version des Nutzens N1 sein. Wie anhand der Fig. 2 erläutert worden ist, ist auch ein Rastersatz vorgegeben, zu welchem der Arbeitsrastersatz im Endeffekt ähnlich sein soll. Die Abstände wx und wu zwischen den Zentren zweier Gravurspalten bzw. Gravurzeilen sind damit vorgegeben.

In der Druckvorlage befindet sich beispielsweise eine Gitterstruktur (Linienelement) gemäss Fig. 5. Wegen der unterschiedlichen Größe der Nutzen N1 und N2 ergeben sich aus der konkreten Geometrie der Gitterstruktur insgesamt vier Strukturfrequenzen Fx(N1), Fu(N1), Fx(N2), Fu(N2), welche mit dem Arbeitsraster zur Deckung gebracht werden müssen.

Im Prinzip muß nun der grösste gemeinsame Teiler ggT (engl. gcd = greatest common denominator) zwischen den Strukturperioden Fx(N1) und Fx(N2) sowie Fu(N1) und Fu(N2) bestimmt werden. Weil im vorliegenden Beispiel (wegen den zwei unterschiedlich großen und angesichts der Größenverhältnisse nicht leicht aufeinander abstimmbaren Nutzen) die Modifikation der Abstände wu und wx zum Einstellen der optimalen Arbeitsraster-Periode bereits stark eingeschränkt würde, wird die Zylinderoberfläche gemäß einer bevorzugten Ausführungsform zunächst in zwei Abschnitte x1 und x2 (Datenblöcke) unterteilt, die, da in Achsrichtung liegend, mit unterschiedlichen Arbeitsrastern graviert werden können. Die beiden (in sich jeweils homogenen) Abschnitte x1 und x2 können nunmehr völlig unabhängig voneinander (und analog zueinander) behandelt werden. Im folgenden wird deshalb nur noch auf den Abschnitt x1 Bezug genommen.

Im nächsten Schritt muss der grösste gemeinsame Teiler ggT mit der Rasterstruktur (wx, wu) eines Nutzens (z.B. N1.1) verglichen werden. Sollte der größte gemeinsame Teiler ggT ausnahmsweise mit der Rasterstruktur übereinstimmen bzw. ein ganzzahliges Vielfaches davon sein, kann der Prozess abgeschlossen werden ohne wx und wu zu verändern. In der Regel ist das nicht der Fall und die Abstände wx und wu müssen so modifiziert werden, dass der größte gemeinsame Teiler ggT in u-Richtung und der Abstand wu einerseits sowie der größte gemeinsame Teiler in x-Richtung und wx andererseits (im Sinne einer Modulo-Operation, also bis auf ein ganzzahliges Vielfaches) zur Deckung kommen. (Ist beispielsweise Fu = 0.5 mm und wu = 0.11 mm, muß der Abstand wu so verändert werden, das genau vier oder genau fünf Rasterpunkte auf die Periode Fu fallen). Als Randbedingung ist zu berücksichtigen, dass diese Modifikation sich in bestimmten Grenzen (Variationsbereich) bewegt, um später die erforderliche Ähnlichkeit zur Rastervorgabe zu erreichen. Können die erwähnten Größen in Übereinstimmung gebracht werden, so ist der Prozess hiermit abgeschlossen, d. h. wu und wx werden im erforderlichen Maß angepaßt. (In der Praxis ist die Anpassung geringfügig.)

Kann die Übereinstimmung nicht erreicht werden, ist eine Frequenzüberlagerung mit hoher Periodizität zu wählen, um Moire und Schwebungen zu minimieren. Als Ergebnis dieser Prozeur werden neue Werte für wu und wx ausgegeben.

Die Abmessungen des Nutzens N1x_mm und N1u_mm werden nun durch die neu ermittelten Abstände wu und wx geteilt. Daraus ergeben sich die Größen N1x_cell, N1u_cell (auf deren Basis das Rasterbild erzeugt werden kann). Wenn dabei Bruchteile von Rasterzellen-Abständen entstehen, weil sich die Grösse in mm nicht ganzzahlig durch die Abstände wu und wx teilen lässt, wird das später durch die Modifikation der Höhe bzw. Breite der Rasterzellen kompensiert.

Der Gravurdaten-Rechner richtet jetzt zunächst die anderen Bildelemente des Nutzens auf das berechnete Arbeitsraster aus. Dabei werden die allgemein bekannten (von der Firma Adobe entwickelten) Verfahren "Font-Hinting" und "Stroke-Hinting" verwendet.

Geht es nur um eine einfarbige Produktion bzw. ist die erwähnte Gitterstruktur nicht in einer Prozeßfarbe sondern nur in einer Sonderfarbe zu drucken, kann jetzt die ganze Druckvorlage rasterisiert werden. Andernfalls sind die erwähnten Anpassungen für alle betroffenen Farbraster zu berechnen und erforderlichenfalls auch aufeinander abzugleichen (d. h. alle Farbraster müssen stimmen). Weil die Verfahrensschritte für alle Farbraster im Prinzip dieselben sind, wird hier nicht näher darauf eingegangen.

Da im Beispiel gemäss Fig. 4 sowohl in Achs- als auch in Umfangsrichtung mehrere Nutzen graviert werden, kann die weiter oben erwähnte Anpassung der Abstände wx und wu zu einer unerwünschten "Fehlerausbreitung" führen (Akkumulation). Dies kann durch erneute Modifikation der Abstände wx und wu kompensiert werden. In diesem Fall wird allerdings nicht neu rasterisiert, sondern die Rasterzellen (Näpfchen) werden lediglich in der Form verändert (gestreckt/gestaucht).

Um zwischen den unterschiedlichen Farben keine Probleme wegen Fehlanpassung der Rasterkombination zu erhalten, kann ebenfalls noch der Abstand dx verändert werden. Es werden kleine Korrekturdistanzen (in der Größenordnung von kleiner als 1-2%) eingefügt.

Dieser Schritt verändert zwar die metrischen Abmessungen innerhalb der Abbildungen, dies allerdings in einem geringeren Maß als die später im Druck stattfindende Veränderung der Grössen z.B. durch Schrumpfung des Papiers.

Die Gravurmaschine erhält nun folgende Informationen: Rasterdatei für den Zylinderabschnitt x1 mit den zugehörigen Abständen wu und wx sowie den ermittelten Korrekturen; Rasterdatei für den Zylinderabschnitt x2 mit den zugehörigen Abständen wu und wx sowie den ermittelten Korrekturen.

Die Erfindung kann in vielfältiger Weise variiert werden. Grundsätzlich ist es möglich, auf jeder Stufe Korrekturen einzuführen, also nicht nur beim Anpassen der Linien- und Schriftelemente sondern auch bei der Berücksichtigung der Abmessungen der Nutzen und der Anzahl bzw. Anordnung der Nutzen auf der Zylinderoberfläche. Beispielsweise kann es vorteilhaft sein, bei Nutzen, die später gestanzt werden, innerhalb der Stanzlinie kleine Anpassungen vorzunehmen (z.B. durch Einfliegen eines zusätzlichen Vorschubschrittes). Es ist auch gar nicht immer erforderlich, alle beschriebenen Stufen zu durchlaufen.

Zusammenfassend ist festzustellen, dass durch die Erfindung neue Möglichkeiten geschaffen worden sind, insbesondere bei der mechanischen Herstellung von Tiefdruckzylindern, um qualitativ hochwertige Druckerzeugnisse herzustellen. Der Prozess kann vollautomatisch oder mit manuellen Eingriffsmöglichkeiten ablaufen.

## Patentansprüche

1. Verfahren zur Erzeugung von Gravurdaten (6), insbesondere für einen Tiefdruckzylinder, auf der Basis einer vektorisierten Druckvorlage (1) und einer Rastervorgabe (2), wobei für die Gravurdaten mindestens ein Arbeitsraster (4) gewählt wird, das von der Rastervorgabe (2) hinsichtlich einer Druckdichte und/oder Winkelung abweicht, **dadurch gekennzeichnet, dass** die Wahl des Arbeitsrasters (4) in Abhängigkeit einer Breite, einem Abstand und/oder einer Periodizität von in der Druckvorlage (1) enthaltenen Linienelementen und/oder in Abhängigkeit von Font-Hinting-Daten von in der Druckvorlage vorhandenen Schriftelementen innerhalb eines vordefinierten Variationsbereichs erfolgt.

2. Verfahren nach Anspruch 1, **dadurch gekennzeichnet, daß** in der Druckvorlage (1) zuerst mindestens ein Linienelement ausgewählt wird und dass innerhalb des Variationsbereiches ein an eine Periodizität des ermittelten Linienelementes bezüglich Dichte und/oder Winkel angepaßtes Arbeitsraster ermittelt wird.

3. Verfahren nach Anspruch 2, **dadurch gekennzeichnet, daß** das Arbeitsraster unter zusätzlicher Berücksichtigung von Stroke-Hinting-Daten angepaßt wird.

4. Verfahren nach Anspruch 2 oder 3, **dadurch gekennzeichnet, daß** in der Druckvorlage (1) Schriftelemente ausgewählt werden und daß diese mit Hilfe von Font-Hinting-Daten an das Arbeitsraster angepaßt werden.

5. Verfahren nach einem der Ansprüche 1 bis 4, **dadurch gekennzeichnet, daß** die zu verschiedenen Prozeßfarben gehörenden Rastergeometrien in Zeilen- und/oder Vorschubrichtung gedehnt oder gestaucht werden, um auf das ausgewählte Linienelement ausgerichtet zu sein.

6. Verfahren nach einem der Ansprüche 1 bis 5, **dadurch gekennzeichnet, daß** aus der Druckvorlage (1) mindestens zwei Nutzen ausgewählt werden und daß das Arbeitsraster an die Nutzen durch zusätzliches Dehnen oder Stauchen angepaßt wird.

7. Verfahren nach Anspruch 6, **dadurch gekennzeichnet, daß** die Gravurdaten (6) auf eine Abmessung des Tiefdruckzylinders angepaßt werden, indem zwischen einzelnen Nutzen zusätzliche Vorschubschritte eingeschoben werden.

8. Verfahren nach einem der Ansprüche 1 bis 7, **dadurch gekennzeichnet, daß** die Gravurdaten für den Tiefdruckzylinder in Vorschubrichtung in Abschnitte mit unterschiedlichen Arbeitsrastern aufgeteilt werden.

9. Verfahren nach einem der Ansprüche 1 bis 8, **dadurch gekennzeichnet, daß** der Variationsbereich ≤1/3, insbesondere ≤1/5 einer Druckdichte und/oder einer Winkelung beträgt.

10. Vorrichtung zum Gravieren eines Tiefdruckzylinders (8), umfassend einen Raster-Rechner (3), einen Gravurdaten-Rechner (5) zum Berechnen von Gravurdaten (6) auf der Basis einer vektorisierten Druckvorlage (1) und einer Rastervorgabe (2) und eine Gravurmaschine (7) mit einem frei einstellbaren Vorschub in Achsenrichtung und einem frei einstellbaren Rasterzeilen-Abstand in Zeilenrichtung zum Gravieren des Tiefdruckzylinders (8) in Abhängigkeit von den Gravurdaten(6), wobei der Raster-Rechner (3) derart ausgebildet ist, dass er in Abhängigkeit einer Breite, einem Abstand und/oder einer Periodizität von in der Druckvorlage (1) enthaltenen Linienelementen und/oder in Abhängigkeit von Font-Hinting-Daten von in der Druckvorlage vorhandenen Schriftelementen innerhalb eines vordefinierten Variationsbereichs ein an die Druckvorlage (1) hinsichtlich einer Druckdichte und/oder Winkelung angepasstes Arbeitsraster (4) ermitteln kann.

11. Software-Produkt zur Erzeugung von Gravurdaten (6), insbesondere für einen Tiefdruckzylinder, auf der Basis einer vektorisierten Druckvorlage (1) und einer Rastervorgabe (2), wobei für die Gravurdaten mindestens ein Arbeitsraster (4) gewählt wird, das von der Rastervorgabe (2) hinsichtlich einer Druckdichte und/oder Winkelung abweicht, **dadurch gekennzeichnet, dass** die Wahl des Arbeitsrasters (4) in Abhängigkeit einer Breite, einem Abstand und/oder einer Periodizität von in der Druckvorlage (1) enthaltenen Linienelementen und/oder in Abhängigkeit von Font-Hinting-Daten von in der Druckvorlage vorhandenen Schriftelementen innerhalb eines vordefinierten Variationsbereichs erfolgt.

## Claims

1. Method for the generation of engraving data (6), in particular for a gravure printing cylinder, on the basis of a vectorized printing original (1) and a grid predefinition (2), at least one working grid (4) which differs from the grid predefinition (2) with regard to a printing density and/or angle being chosen for the engraving data, **characterized in that** the choice of the working grid (4) is made within a predefined variation range as a function of a width, a spacing and/or a periodicity of line elements contained in the printing original (1) and/or as a function of font hinting data from text elements present in the printing original.

2. Method according to Claim 1, **characterized in that** firstly at least one line element is chosen in the printing original (1), and **in that**, within the variation range, a working grid matched to a periodicity of the line element determined with respect to density and/or angle is determined.

3. Method according to Claim 2, **characterized in that** the working grid is matched while additionally taking stroke hinting data into account.

4. Method according to Claim 2 or 3, **characterized in that** text elements are chosen in the printing original (1), and **in that** these are matched to the working grid with the aid of font hinting data.

5. Method according to one of Claims 1 to 4, **characterized in that** the grid geometries belonging to various process colours are extended or compressed in the line and/or feed direction in order to be aligned with the chosen line element.

6. Method according to one of Claims 1 to 5, **characterized in that** at least two representatives are chosen from the printing original (1), and **in that** the working grid is matched to the representatives by additional extension or compression.

7. Method according to Claim 6, **characterized in that** the engraving data (6) are matched to a dimension of the gravure printing cylinder by additional feed steps being inserted between individual representatives.

8. Method according to one of Claims 1 to 7, **characterized in that** the engraving data for the gravure printing cylinder are divided up in the feed direction into sections having different working grids.

9. Method according to one of Claims 1 to 8, **characterized in that** the variation range is ≤ 1/3, in particular ≤ 1/5, of a printing density and/or an angle.

10. Apparatus for engraving a gravure printing cylinder (8), comprising a raster computer (3), an engraving data computer (5) for calculating engraving data (6) on the basis of a vectorized printing original (1) and a grid predefinition (2) and an engraving machine (7) having a freely adjustable feed in the axial direction and a freely adjustable grid cell spacing in the line direction for engraving the gravure printing cylinder (8) as a function of the engraving data (6), the raster computer (3) being constructed in such a way that, as a function of a width, a spacing and/or a periodicity of line elements contained in the printing original (1) and/or as a function of font hinting data from text elements present in the printing original, it is able to determine a working grid (4) matched to the printing original (1) with regard to a printing density and/or angle within a predefined variation range.

11. Software product for the generation of engraving data (6), in particular for a gravure printing cylinder, on the basis of a vectorized printing original (1) and a grid predefinition (2), at least one working grid (4) which differs from the grid predefinition (2) with regard to a printing density and/or angle being chosen for the engraving data, **characterized in that** the choice of the working grid (4) is made within a predefined variation range as a function of a width, a spacing and/or a periodicity of line elements contained in the printing original (1) and/or as a function of font hinting data from text elements present in the printing original.

## Revendications

1. Procédé de création de données de gravure (6), en particulier pour un cylindre d'héliogravure, à partir d'un original à imprimer (1) vectorisé et d'une définition de trame (2), au moins une trame de travail (4) dont la densité d'impression et/ou l'orientation diffèrent de la définition de trame (2) étant sélectionnée pour les données de gravure, **caractérisé en ce que** la sélection de la trame de travail (4) s'effectue à l'intérieur d'une plage de variation prédéfinie de la largeur, de la distance et/ou de la périodicité d'éléments de ligne que contient l'original à imprimer (1) et/ou en fonction de données d'indication de fonte des caractères d'impression que contient l'original à imprimer.

2. Procédé selon la revendication 1, **caractérisé en ce que** l'on sélectionne d'abord au moins un élément de ligne dans l'original à imprimer (1) et **en ce qu'**à l'intérieur de la plage de variation, on détermine une trame de travail adaptée à la périodicité de la densité et/ou de l'orientation de l'élément de ligne déterminé.

3. Procédé selon la revendication 2, **caractérisé en ce que** la trame de travail est adaptée en tenant en outre compte de données d'indication de course.

4. Procédé selon les revendications 2 ou 3, **caractérisé en ce que** l'on sélectionne des caractères d'impression dans l'original à imprimer (1) et **en ce qu'**on les adapte à la trame de travail à l'aide des données d'indication de fonte.

5. Procédé selon l'une des revendications 1 à 4, **caractérisé en ce que** la géométrie des trames qui correspondent à différentes couleurs de traitement sont allongées ou comprimées dans la direction des lignes et/ou dans la direction d'avancement pour les aligner sur l'élément de ligne sélectionné.

6. Procédé selon l'une des revendications 1 à 5, **caractérisé en ce que** l'on sélectionne au moins deux flans dans l'original à imprimer (1) et **en ce que** la grille de travail est adaptée aux flans par allongement ou compression supplémentaires.

7. Procédé selon la revendication 6, **caractérisé en ce que** les données de gravure (6) sont adaptées à une dimension du cylindre d'héliogravure en insérant des étapes d'avancement supplémentaires entre les flans individuels.

8. Procédé selon l'une des revendications 1 à 7, **caractérisé en ce que** les données de gravure sont divisées dans le sens d'avancement du cylindre d'héliogravure en tronçons qui présentent différentes trames de travail.

9. Procédé selon l'une des revendications 1 à 8, **caractérisé en ce que** la plage de variation représente ≤ 1/3 et en particulier ≤ 1/5 de la densité d'impression et/ou de l'orientation.

10. Dispositif pour graver un cylindre d'héliogravure (8), lequel dispositif comprend un calculateur de trame (3), un calculateur de données de gravure (5) qui calcule les données de gravure (6) à partir d'un original imprimé (1) vectorisé et d'une définition de trame (2) ainsi qu'une machine de gravure (7) dont l'avancement dans la direction axiale peut être réglé librement et dont la distance entre les lignes de trame dans la direction des lignes peut être réglée librement, pour graver le cylindre d'héliogravure (8) à partir des données de gravure (6), le calculateur de trame (3) étant configuré de telle sorte qu'il peut déterminer une trame de travail (4) dont la densité d'impression et/ou l'orientation sont adaptées à l'original à imprimer (1) à l'intérieur d'une plage de variation prédéfinie de la largeur, de la distance et/ou de la périodicité d'éléments de ligne contenus dans l'original à imprimer (1) et/ou de données d'indication de fonte de caractères d'impression que contient l'original à imprimer.

11. Produit logiciel en vue de la création de données de gravure (6), en particulier pour un cylindre d'héliogravure, à partir d'un original à imprimer (1) vectorisé et d'une définition de trame (2), dans lequel au moins une trame de travail (4) dont la densité d'impression et/ou l'orientation diffèrent de la définition de trame (2) est sélectionnée pour les données de gravure, **caractérisé en ce que** la sélection de la trame de travail (4) s'effectue à l'intérieur d'une plage de variation prédéfinie de la largeur, de la distance et/ou de la périodicité d'éléments de ligne que contient l'original à imprimer (1) et/ou de données d'indication de fonte des caractères d'impression présents dans l'original à imprimer.
